# EUROPEAN PATENT SPECIFICATION

(11) **EP 2 823 624 B1**
(45) Date of publication and mention of the grant of the patent: **17.05.2017**
(21) Application number: 13708321.8
(22) Date of filing: 25.02.2013
(51) Int. Cl.: H04L 29/08, H04L 12/26, H04L 29/12

(54) **METHOD AND APPARATUS FOR IDENTIFYING AN APPLICATION ASSOCIATED WITH AN IP FLOW USING DNS DATA**
VERFAHREN UND VORRICHTUNG ZUR IDENTIFIZIERUNG EINER MIT EINEM IP-FLUSS ASSOZIIERTEN ANWENDUNG UNTER VERWENDUNG VON DNS DATEN
PROCÉDÉ ET APPAREIL PERMETTANT D'IDENTIFIER UNE APPLICATION ASSOCIÉE À UN FLUX IP À L'AIDE DE DONNÉES DE SYSTÈME DNS

(30) Priority: 09.03.2012 US 201213415881
(43) Date of publication of application: 14.01.2015
(73) Proprietor: Alcatel Lucent, 92100 Boulogne-Billancourt (FR)
(72) Inventor: ZHAO, Yao, Oakland, CA 94611 (US); SUBRAMANIAN, Anand, Prabhu, Murray Hill, NJ 07974-0636 (US); BU,Tian, Murray Hill, NJ 07974-0636 (US)
(74) Representative: Berthier, Karine
(86) International application number: PCT/US2013/027596
(87) International publication number: WO 2013/134005

(56) References cited:
- US-A1- 2002 073 335
- US-B1- 7 849 502
- US-B1- 7 949 724

## Description

### BACKGROUND

### Field

Example embodiments relate generally to identifying applications associated with IP flows in communications networks.

### Background

Internet IP traffic may be monitored in order to find out the type of applications that a particular IP flow carries. This application information may be used by service providers, both wireless and wireline, for marketing research, traffic policing, and general network intelligence. Enterprise networks may use this application information for their policy enforcement and traffic awareness. Presently, methods of determining an application associated with an IP flow include analyzing an IP address and/or subnet, a port and a protocol; and performing deep packet inspection (DPI) by looking for signature strings in IP traffic that match a known string of an application.

Further information pertaining to the prior art can be found in US patent 7,849,502 that discloses a data processing apparatus that can perform HTTP traffic monitoring and filtering of HTTP requests from clients and responses from servers. The apparatus comprises a processor, a first network interface to a protected network, a second network interface to an external network, and a traffic monitor having an address-domain name database, a firewall rules manager, and a DNS snooper. The traffic monitor accesses a blacklist and can perform receiving, from a client computer, a request to access a resource in the external network; blocking the request to the resource when a user agent of the client is in the blacklist as malicious software or when a file extension in a response to the request is in the blacklist; requesting, from a web reputation service, and receiving a reputation score indicating a reputation of the resource; blocking sending the request to the resource when the reputation is below a specified threshold.

US patent 7,949,724 discloses techniques for monitoring user Internet activity based on DNS information. The techniques include accessing a plurality of query logs from a plurality of DNS servers and retrieving a plurality of DNS requests from the query logs. The DNS requests are requests from a various computing devices that have requested web content from web servers indicated by IP addresses. The techniques further include processing the DNS requests to determine Internet-based activity information by the plurality of computing devices that requested the web content and determining attention data based on the activity information. The attention data indicates web search trends based on the corresponding IP addresses accessed by the requesting computing devices.

### SUMMARY

A method of handling application data associated with IP flows traveling between a plurality of mobiles and a network element in a communications network may include receiving, at a network element, one or more domain name system (DNS) packets being sent to one or more mobiles from among of the plurality of mobiles; and building, at the network element, a mapping table mapping one or more IP addresses, respectively, to corresponding application information, based on mapping information within the one or more DNS packets received at the network element.

The application information may be at least one of a host name read from the one or more DNS packets received at the network element, and a name of an application corresponding to the read host name.

The received DNS packets may be DNS response packets, and building the mapping table may include reading the one or more IP addresses and one or more host names corresponding to the one or more IP addresses from the one or more DNS packets received at the network element.

The method may further comprise receiving, at the network element, an IP data packet being sent to or from a mobile of the plurality of mobiles; and identifying application information associated with the received IP data packet by searching the mapping table based on the IP data packet.

Searching the mapping table may include selecting application data in the mapping table corresponding to a sender IP address in the mapping table as the identified application information, if the received IP data packet is a packet being sent to one of the plurality of mobiles, the sender IP address being a sender IP address of the received IP data packet. Searching the mapping table may include selecting application information corresponding to a destination IP address in the mapping table as the identified application information, if the received IP data packet is a packet being sent from one of the plurality of mobiles, the destination IP address being a destination IP address of the received IP data packet.

The method may further include identifying, at the network element, the mobile from among the one or more mobiles the IP data packet received at the network element is being sent to or from; building a tracking database including sections corresponding to each of the plurality of mobile devices; and forming an entry in the tracking database corresponding to the identified application information, the entry being formed in the section of the tracking database which corresponds to the identified mobile.

The identified application information may be a host name, and the entry formed in the tracking database is a name of an application corresponding to the host name.

The mapping table may be a hash table.

A network apparatus for handling application data associated with IP flows traveling between a plurality of mobiles and the network apparatus in a communications network may include a data receiving unit; a data transmitting unit; a memory unit configured to store parameters corresponding with a plurality mobiles in communication with the network element; and a processing unit coupled to the data transmitting unit, the data receiving unit, and the memory unit and configured to control operations. The controlled operations may include receiving one or more domain name system (DNS) packets being sent to one or more mobiles from among the plurality of mobiles; and building a mapping table mapping one or more IP addresses, respectively, to corresponding application information, based on mapping information within the one or more DNS packets received at the network apparatus.

The application information may be at least one of a host name read from the one or more DNS packets received at the network element, and a name of an application corresponding to the read host name.

The received DNS packets may be DNS response packets, and the processing unit may be configured such that the building the mapping table includes reading the one or more IP addresses and one or more host names corresponding to the one or more IP address from the one or more DNS packets received at the network apparatus.

The processing unit may be further configured to control operations including, receiving an IP data packet being sent to or from a mobile from among the plurality of mobiles; and identifying application information associated with the received IP data packet by searching the mapping table based on the IP data packet.

The processing unit may be configured such that the searching the mapping table includes selecting application data in the mapping table corresponding to a sender IP address in the mapping table as the identified application information, if the received IP data packet is a packet being sent to one of the plurality of mobiles, the sender IP address being a sender IP address of the received IP data packet. The processing unit may be configured such that, the searching the mapping table includes selecting application information corresponding to a destination IP address in the mapping table as the identified application information, if the received IP data packet is a packet being sent from one of the plurality of mobiles, the destination IP address being a destination IP address of the received IP data packet.

The processing unit may be further configured to control operations including, identifying the mobile from among the one or more mobiles the received IP data packet is being sent to or from; building a tracking database including sections corresponding to each of the plurality of mobile devices; and forming an entry in the tracking database corresponding to the identified application information, the entry being formed in the section of the tracking database which corresponds to the identified mobile.

The application information may be a host name, and the entry formed in the tracking database is a name of an application corresponding to the host name.

The mapping table may be a hash table.

### BRIEF DESCRIPTION OF THE DRAWINGS

Example embodiments will become more fully understood from the detailed description provided below and the accompanying drawings, wherein like elements are represented by like reference numerals, which are given by way of illustration only and thus are not limiting and wherein:
FIG. 1 illustrates a portion of a wireless communications network according to at least one example embodiment.
FIG. 2 is a diagram illustrating a structure of a network element for identifying an application associated with an IP flow using DNS data according to at least one example embodiment.
FIG. 3 illustrates a method of mapping application information to IP addresses according to at least one example embodiment.
FIG. 4 illustrates a method of using mapping information to identify an application associated with an IP flow.

### DETAILED DESCRIPTION OF EXAMPLE EMBODIMENTS

At least one example embodiment will now be described more fully with reference to the accompanying drawings in which some example embodiments are shown.

Detailed illustrative embodiments are disclosed herein. However, specific structural and functional details disclosed herein are merely representative for purposes of describing at least one example embodiment. Example embodiments may, however, be embodied in many alternate forms and should not be construed as limited to only the embodiments set forth herein.

Accordingly, while example embodiments are capable of various adaptations and alternative forms, embodiments thereof are shown by way of example in the drawings and will herein be described in detail. It should be understood, however, that there is no intent to limit example embodiments to the particular forms disclosed, but on the contrary, example embodiments are to cover all adaptations, equivalents, and alternatives falling within the scope of the claims. Like numbers refer to like elements throughout the description of the figures. As used herein, the term "and/or" includes any and all combinations of one or more of the associated listed items.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between", "adjacent" versus "directly adjacent", etc.).

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising,", "includes" and/or "including", when used herein, specify the presence of stated features, integers, steps, operations, elements, and/or components, but do not preclude the presence or addition of one or more other features, integers, steps, operations, elements, components, and/or groups thereof.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

As used herein, the term user equipment (UE) may be considered synonymous to, and may hereafter be occasionally referred to, as a terminal, mobile unit, mobile station, mobile user, access terminal (AT), subscriber, user, remote station, access terminal, receiver, etc., and may describe a remote user of wireless resources in a wireless communication network. The term base station (BS) may be considered synonymous to and/or referred to as a base transceiver station (BTS), NodeB, extended Node B (eNB), access point (AP), etc. and may describe equipment that provides the radio baseband functions for data and/or voice connectivity between a network and one or more users.

Exemplary embodiments are discussed herein as being implemented in a suitable computing environment. Although not required, exemplary embodiments will be described in the general context of computer-executable instructions, such as program modules or functional processes, being executed by one or more computer processors or CPUs. Generally, program modules or functional processes include routines, programs, objects, components, data structures, etc. that performs particular tasks or implement particular abstract data types.

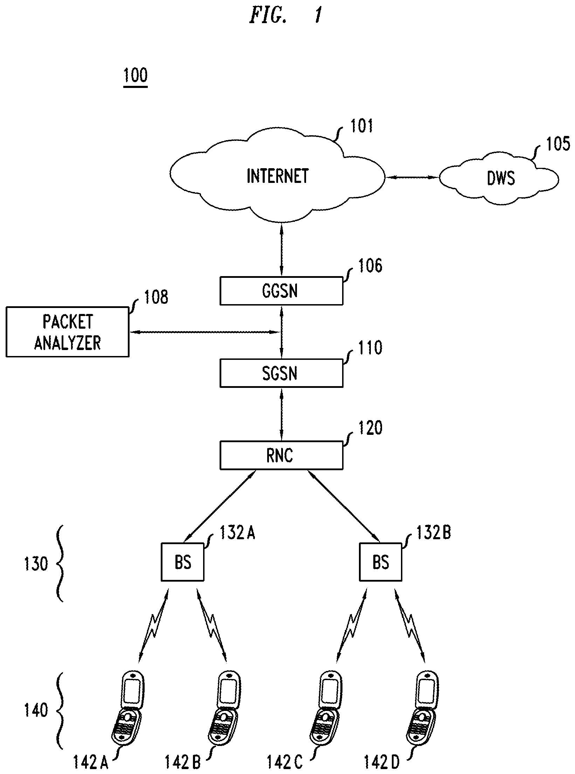

The program modules and functional processes discussed herein may be implemented using existing hardware in existing communication networks. For example, program modules and functional processes discussed herein may be implemented using existing hardware at existing network elements or control nodes (e.g., the serving general packet radio service (GPRS) support node (SGSN), packet analyzer, gateway GPRS support node (GGSN), radio network controller (RNC), and/or base stations (BS) shown in FIG. 1). Such existing hardware may include one or more digital signal processors (DSPs), application-specific-integrated-circuits, field programmable gate arrays (FPGAs) computers or the like.

In the following description, illustrative embodiments will be described with reference to acts and symbolic representations of operations (e.g., in the form of flowcharts) that are performed by one or more processors, unless indicated otherwise. As such, it will be understood that such acts and operations, which are at times referred to as being computer-executed, include the manipulation by the processor of electrical signals representing data in a structured form. This manipulation transforms the data or maintains it at locations in the memory system of the computer, which reconfigures or otherwise alters the operation of the computer in a manner well understood by those skilled in the art.

### Overview of Network Architecture

FIG. 1 illustrates a portion of a wireless communications network 100. In the example illustrated in FIG. 1, the wireless communications network 100 is structured, and operates, according to the known UMTS protocol. However, according to at least some example embodiments, the wireless communications network 100 may be structured to support any known wireless communications protocol including, for example, CDMA2000, EVDO, LTE, and WiMax.

Wireless communications network 100 includes serving general packet radio service (GPRS) support node (SGSN) 110; a gateway GPRS support node (GGSN) 106; a packet analyzer 108; a radio network controller (RNC) 120, a plurality of base stations (BSs) 130 and a plurality of user equipments (UEs) 140. Though not pictured, for the purpose of simplicity, wireless communications network 100 may include other elements of a UMTS core network.

The UEs 140 may include, for example, first through fourth UEs 142A-142D. The UEs 140 may be, for example, mobile phones, smart phones, computers, or personal digital assistants (PDAs). The UEs 140 may be in wireless communication with corresponding ones of the BSs 130.

The BSs 130 may include first BS 132A and second BS 132B. The BSs 130 operate according to known methods and provide wireless coverage for UEs in wireless communication with the BSs 130. For example, the first and second UEs 142A and 142B may be in wireless communication with the first BS 132A, and the third and fourth UEs 142C and 142D may be in wireless communication with the second BS 132B. The BSs 130 are connected to the RNC 120.

The RNC 120 operates according to known methods and receives data from and forwards data to the BSs 130. The RNC 120 also controls operations of the BSs 130 and handles radio resource management for the BSs 130. Though, for the purpose of simplicity, the wireless communications network 100 is illustrated as including only the first and second BSs 132A and 132B, the wireless communications network 100 may include any number of BSs. The RNC is connected to the SGSN 110.

The SGSN 110 operates according to known methods and is connected to the GGSN 106. The SGSN 110 handles routing and delivery of data packets between the UEs 140 and the GGSN 106. The GGSN 106 operates according to known methods and handles delivery of packets between the SGSN 110 and packet data networks including, for example, the internet 101.

The internet 101 includes a domain name system (DNS) 105. The DNS 105 includes a plurality of DNS servers, which perform a number of operations including translation of hostnames into IP addresses. The DNS 105 operates according to known standards including, for example, the DNS specifications published by the Internet Engineering Task Force (IETF).

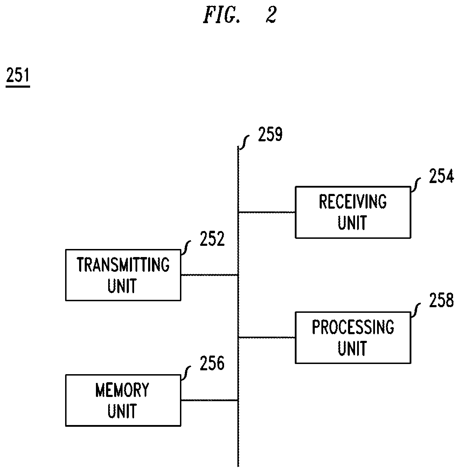

The packet analyzer 108 may be connected to a connection between the GGSN 106 and the SGSN 110. The packet analyzer 108 may access and analyze data, which is sent between the GGSN 106 and the SGSN 110 including, for example, IP data packets. An example structure and operation of the packet analyzer 108 will be discussed in greater detail below with reference to FIG. 2.

### Explanation of Identifying an Application through IP Packet Analysis

Network elements within a wireless communications network are capable of analyzing an IP address, an IP subnet, a port and/or a protocol associated with an IP packet. Previously, this analysis could be used to determine a type of application associated with an IP flow of which the analyzed packet was part. However, presently, since content distribution networks (CDNs) and cloud computing are rising in popularity, one IP subnet may correspond to many different applications. Further, the IP addresses of computers which serve a particular application may be changed.

Additionally, multiple IP addresses may be used to access one application. Accordingly, it may be difficult to determine an application associated with an IP flow based only on a conventional analysis of an IP address, an IP subnet, a port and/or a protocol associated with an IP packet with the IP flow.

Further, deep packet inspection (DPI) is capable of analyzing IP packets in an IP flow for signature strings and/or behavior signatures in order to determine an application associated with the IP flow. However, DPI is less effective with respect to applications for which the corresponding IP flows have no well known signature strings. Such applications include, for example, applications which use data packets having proprietary protocols. Additionally, the effectiveness of DPI is significantly reduced when the data packets include encrypted data.

### Method and Apparatus for Identifying an Application Associated with an IP Flow using DNS Data

As is described above, there are drawbacks to attempting to identify an application associated with an IP flow based on conventional analysis of IP packet information including address, subnet, port or protocol. Further, as is described above, there are drawbacks to using the conventional method of DPI. Accordingly, it may be useful to implement a method of identifying an application associated with an IP flow which does not rely upon IP addresses, IP subnets, ports and/or protocols being fixed or well known. Further, it may be useful to implement a method of identifying an application associated with an IP flow which does not rely upon access to packet data which may have an unknown protocol or be encrypted. According to at least one example embodiment, such a method may be implemented using DNS data.

For example, the DNS implements the well-known domain name service by which DNS clients send queries to a DNS server and receive, from the DNS servers, DNS responses. A DNS query may include a host name (e.g., the host name "www. example. com" maintained by the Internet Assigned Number Authority (IANA)). Further, the DNS response to the DNS query may include the host name in the DNS query as well as the corresponding IP address (e.g. "192. 0. 43. 10").

Using the wireless communications network 100 as an example, if an application being run on, for example, the first UE 142A needs to access data associated with a particular host name, and the IP address associated with the particular host name is not included in a cache within the first UE 142A, the first UE 142A may generate a DNS query requesting translation of the host name, and send the DNS query to the DNS 105. Further, once the DNS 105 determines the IP address associated with the requested host name in the DNS query, the DNS 105 will (i) generate a DNS response including the requested host name and the IP address associated with the requested host name, and (ii) send the DNS response to the first UE 142A. The DNS response will pass through many network elements in the wireless communications system 100 including, for example, the GGSN 106, the SGSN 110, the RNC 120 and the BS 132A. Accordingly, the packet analyzer 108, for example, will have access to DNS data within the DNS response including both the requested host name and the IP address associated with the requested host name. Further the DNS data will be both current and presented in a known, standardized format.

According to at least one example embodiment, a method of identifying an application associated with an IP flow using DNS data includes using a network element within a wireless communications network to read DNS data from DNS queries and corresponding DNS responses to determine current mapping relationships between host names and IP address, and building an application mapping table including the determined mapping relationships. Applications associated with IP flows are then determined by, identifying a destination or sender IP address included in the IP packet, comparing the identified IP address to the Application mapping table, and returning the host name associated with the identified IP address based on the comparison. The host name may then be matched to an application known to be associated with the host name.

A method and apparatus for identifying an application associated with an IP flow using DNS data will now be discussed in greater detail below with reference to FIGS. 2-5.

FIG. 2 is a diagram illustrating a structure of a network element 251 for identifying an application associated with an IP flow using DNS data according to at least one example embodiment. The network element 251 may be any network element which receives DNS packets corresponding to one of the UEs 140 connected to the wireless network 100. For example, one or more of the GGSN 106, the packet analyzer 108, the SGSN 110, the RNC 120, or one of the BSs 132A or 132B illustrated in FIG. 1 may include an element having the structure and operation of the network element 251.

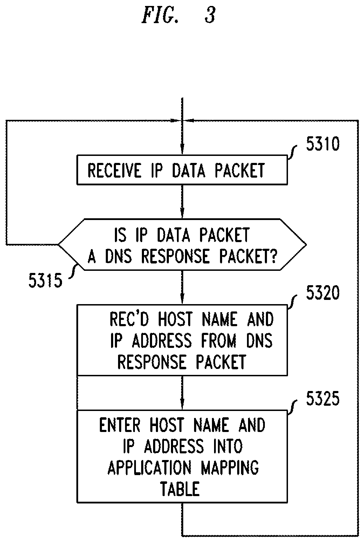

Referring to FIG. 3A, the network element 251 may include, for example, a data bus 259, a transmitting unit 252, a receiving unit 254, a memory unit 356, and a processing unit 358.

The transmitting unit 252, receiving unit 254, memory unit 256, and processing unit 258 may send data to and/or receive data from one another using the data bus 259. The transmitting unit 252 is a device that includes hardware and any necessary software for transmitting wired and/or wireless signals including, for example, data signals and control signals, via one or more wired and/or wireless connections to network elements in the wireless communications network 100. For example, data signals transmitted by the transmitting unit 252 may include IP data packets sent to or from the UEs 140.

The receiving unit 254 is a device that includes hardware and any necessary software for receiving wired and/or wireless signals including, for example, data signals and control signals, via one or more wired and/or wireless connections to network elements in the wireless communications network 100. For example, data signals received by the receiving unit 354 may include IP data packets sent to or from the UEs 140.

The memory unit 256 may be any device capable of storing data including magnetic storage, flash storage, etc.

The processing unit 258 may be any device capable of processing data including, for example, a microprocessor configured to carry out specific operations based on input data, or capable of executing instructions included in computer readable code.

For example, the processing unit 258 is capable of analyzing IP data packets to determine information regarding the IP data packets including whether or not the IP data packets are DNS packets, and a destination and/or sender IP address associated with the IP data packet. Further, the processing unit 258 is also capable of analyzing DNS packets including, for example, DNS response packets, to determine information within the DNS response packet including a host name and an IP address corresponding to the host name. Further, the processing unit 258 is capable of forming a table mapping IP addresses to host names based on the information included in the DNS response packets, and using the table to identify host names corresponding to destination and/or sender IP addresses included in IP data packets.

Example methods for operating the network element 251 will now be discussed in greater detail below with reference FIGS. 3-4. FIGS. 3-4 will be described with respect to an example in which the network element 251 is embodied by the packet analyzer 108.

According to at least one example embodiment, each of the operations illustrated in, or described with respect to, FIGS. 3-4 as being performed by the packet analyzer 108 may be performed by, for example, an element having the structure of the network element 251 as illustrated in FIG. 2. For example, the memory unit 256 may store executable instructions corresponding to each of the operations described below with reference to FIGS. 3-4, as well as any data described with respect to FIGS. 3-4 as being stored by the packet analyzer 108. Further, the processor unit 258 may be configured to perform each of the operations described below with respect to FIGS. 3-4, for example, based on executable instructions stored in the memory unit 256. Further, according to at least one example embodiment, data and/or control signals described as being transmitted or received by the packet analyzer 108 may be transmitted through the transmitting unit 252, or received through the receiving unit 254.

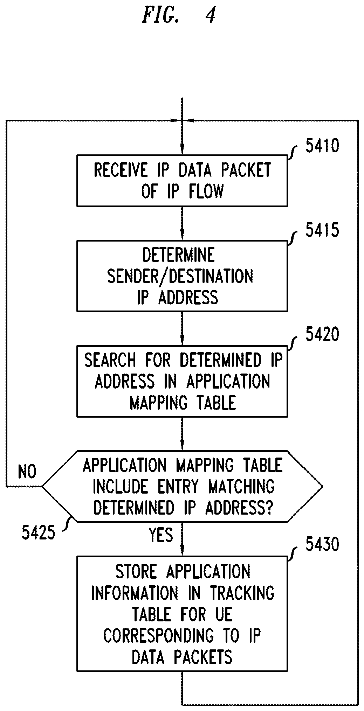

FIGS. 3-4 illustrate methods of handling application information to identify an application associated with an IP flow using DNS data according to at least one example embodiment. FIG. 3 illustrates a method of mapping application information to IP addresses according to at least one example embodiment; and FIG. 4 illustrates a method of using mapping information to identify an application associated with an IP flow according to at least one example embodiment.

Referring to FIG. 4, in step S310 the network element 251 receives an IP data packet. For example, the packet analyzer 108 may receive an IP data packet being sent from the internet 101 towards one of the UEs 140. In step S315, the network element 251 determines whether or not the IP data packet is a DNS response packet. The format of a DNS response packet is known and defined by, for example, IETF specifications. Thus, according to known methods, the packet analyzer 108 may analyze the contents of the IP data packet received in step S310 to determine whether or not the IP data packet is a DNS response packet by determining whether or not the IP data packet includes data having the format of a DNS response packet.

If, in step S315, the network element 251 determines the IP data packet received in step S310 is not a DNS response packet, the network element 251 returns to step S310 and analyzes a next received IP data packet. For example, the packet analyzer 108 may begin processing of a next received IP data packet.

If the network element 251 determines the IP data packet received in step S310 is a DNS response packet, the network element 251 proceeds to step S320.

In step S320, the network element 251 reads a host name and a corresponding IP address from the DNS response packet.

As is known, DNS response packets are generated, for example by DNS servers, in response to DNS query packets. According to the known format of DNS packets, a DNS query packet may include a question section including a host name for which the entity generating the DNS query desires to know the corresponding IP address. The DNS response packet generated in response to the DNS query packet may include the same question section included in the DNS query packet as well as an answer section. The answer section of the DNS response packet may include the host name included in the question section of the DNS response packet as well as the IP address corresponding to the host name included in the question section of the DNS response packet.

The packet analyzer 108, for example, may access the question and/or answer section of the DNS response packet to determine a host name for which the DNS response packet was generated. Further, the packet analyzer 108 may access the answer portion of the DNS response packet to determine the IP address corresponding to the host name for which the DNS response packet was generated.

In step S325, the network element 251 enters the host name and the corresponding IP address read from the DNS response packet in step S320 into an application mapping table. The packet analyzer 108 may generate and store an application mapping table which maps IP addresses to host names. For example, the packet analyzer 108 may create an entry in the application mapping table that maps the host name read in step S320 to the corresponding IP address read in step S320. The application mapping table may be, for example, a hash table in which that table indices are each IP addresses and the table entries are each IP addresses coupled with corresponding host names. The hash table may be formed using any known hash function.

Further, according to at least one example embodiment, the packet analyzer 108 may determine an application associated with the host name read in step S320. The packet analyzer 108 is capable of determining an application associated with a particular host name according to known methods. For example, the packet analyzer 108 may access information stored in the packet analyzer 108 or another element in the wireless communications network 100 which stores associations between host names and the applications to which the host names belong. Accordingly, in step S325, instead of mapping the read IP address to the read host name, the packet analyzer 108 may map the read IP address to an identifier representing an application associated with the read host name, for example, the name of the application.

Once the network element 251 has entered the IP address read in step S320 and the host name or application corresponding to the read IP address into the application mapping table, the network element 251 may return to step S310. For example, after step S325, the packet analyzer 108 may begin processing of a next IP data packet received at the packet analyzer 108.

A process for using the application mapping table developed in step S325 above to identify applications associated with IP flows will be discussed below with reference to FIG. 4.

Referring to FIG. 5, in step S410 the network element 251 receives an IP data packet included in an IP data flow being sent to or from one of the UEs 140. For example, the packet analyzer 108 may receive a data packet which is part of an IP flow being sent from the first UE 142A towards the internet 101.

In step S415, the network element 251 may determine a sender IP address and/or a destination IP address of the IP data packet received in step S410. For example, according to known methods, the packet analyzer 108 may analyze fields of the IP packet received in step S410 to determine an IP address corresponding to the intended destination of the IP data packet. The packet analyzer 108 may additionally, or alternatively, determine an IP address corresponding to the entity that originally sent the IP data packet. For example, if the received IP data packet originated from the internet 101, the packet analyzer 108 may determine a sender IP address of the received IP data packet. Further, if the received IP data packet originated from one of the UEs 140, the packet analyzer 108 may determine the destination IP address of the IP data packet.

In step S420, the network element 251 may search for the IP address determined in step S415 in the application mapping table formed in step S310 discussed above with reference to FIGS. 3 and 4. For example, if the received IP data packet originated from the internet 101, the packet analyzer 108 may search for the sender IP address of the received IP data packet in the application mapping table stored in the packet analyzer 108. If the received IP data packet originated from one of the UEs 140, the packet analyzer 108 may search for the destination IP address in the received IP data packet to the application mapping table.

In step S425, the network element 251 may determine whether or not the determined IP address matches an entry in the application mapping table. For example, as is described above with reference to step S325 in FIG. 4, the application mapping table includes entries mapping IP addresses to corresponding host names or applications. Accordingly, in step S425, the packet analyzer 108 may determine whether or not an entry corresponding to the IP address determined in step S415 exists in the application mapping table stored in the packet analyzer 108.

If, in step S425, the network element 215 determines that no entry corresponding to the IP address determined in step S415 exists in the application mapping table stored in the packet analyzer 108, the network element 215 returns to step S410 to begin analysis of a next IP data packet received at the network element 215.

If, in step S425, the network element 251 identifies an entry corresponding to the IP address determined in step S415 in the application mapping table stored in the network element 251, the network element proceeds to step S430.

In step S430, the network element 251 stores application information in a tracking table for a UE corresponding to the IP data packet received in step S410. For example, the packet analyzer 108 may generate a tracking database which stores tracking information corresponding to UEs within the communications network 100. The tracking database may include, for example, a tracking table corresponding to each UE having an IP flow which passed to the UE or from the UE between the GGSN 106 and the SGSN 110. For each UE, the corresponding tracking table may include application information identified from IP data packets of IP flows of the UE. The application information may be, for example, a host name associated with an IP address read from an IP packet being sent to or from the UE, or an identifier for an application associated with the host name. For example, for a particular host name, the packet analyzer 108 is capable of determining an associated application according to known methods.

For each UE, the tracking table may also include information indicating a timing and/or frequency with which different host names and/or applications are identified as being associated with IP data packets being sent to or from the UE via the connection between the GGSN 106 and the SGSN 110.

After step S430, the network element 251 may return to step S410 to begin analysis of a next IP data packet received at the network element 215.

The network element 251 is capable of executing the methods discussed above in FIGS. 3 and 4, concurrently. For example, the network element 251 may update an application mapping table constantly, in accordance with the method illustrated in FIG. 3, based on information received from latest received DNS packets. Further, at the same time, the network element may use a current application mapping table to associate applications with IP flows constantly, in accordance with the method illustrated in FIG. 4.

Thus, according to the method of identifying an application associated with an IP flow using DNS data described above with respect to examples in FIGS. 3-4, data included in DNS response packets may be used by the network element 251 within the communications network 100 to build an application mapping table within the network element 251. The application mapping table maps IP addresses to corresponding application information. The application information may be the host name corresponding to the IP address or an identifier on an application associated with the host name, for example, the name of the application.

Further, the application mapping table may be used by the network element 251 to determine application information associated with any IP packets passing through the network element 251 and having sender or destination IP addresses corresponding to entries within the application mapping table. For each UE, the determined application information which is associated with IP packets sent to or from the UE can placed into a table within a tracking database stored at the network element. The information stored within the tracking database of the network element 251 may be used by a network operator of the wireless communications network 100 to determine specific application information including the types of applications accessed by each UE connected to the wireless communications network 100, as well as the timing and frequency of such accesses. This access information may have a number of uses for the network operator including, for example, marketing research, traffic policing, traffic awareness, policy enforcement, and general network intelligence.

Example embodiments being thus described, it will be obvious that the same may be varied in many ways. Such variations are not to be regarded as a departure from example embodiments, and all such modifications are intended to be included within the scope of the claims.

## Claims

1. A method of handling application data associated with IP flows traveling between a plurality of mobiles (140) and a network element (108) in a communications network, the method comprising:
receiving, at a network element (108), one or more domain name system, DNS, packets being sent to one or more mobiles from among of the plurality of mobiles (140); and
building, at the network element (108), a mapping table mapping one or more IP addresses, respectively, to corresponding application information, based on mapping information within the one or more DNS packets received at the network element (108);
receiving, at the network element (108), an IP data packet being sent to or from a mobile of the plurality of mobiles (140);
identifying the application information corresponding to the received IP data packet, from among the application information of the mapping table, by searching the mapping table based on the IP data packet;
identifying, at the network element (108), the mobile the received IP data packet is being sent to or from;
building a tracking database (108) including a plurality of sections, the plurality of sections corresponding to the plurality of mobiles, respectively; and
forming an entry in the tracking database (108) corresponding to the identified application information, the entry being formed in the section of the tracking database that corresponds to the identified mobile.

2. The method of claim 1, wherein the application information is at least one of a host name read from the one or more DNS packets received at the network element (108), and a name of an application corresponding to the read host name.

3. The method of claim 2, wherein the received DNS packets are DNS response packets, and building the mapping table includes reading the one or more IP addresses and one or more host names corresponding to the one or more IP addresses from the one or more DNS packets received at the network element (108).

4. The method of claim 1, wherein
the searching the mapping table includes selecting application data in the mapping table corresponding to a sender IP address in the mapping table as the identified application information, if the received IP data packet is a packet being sent to one of the plurality of mobiles (140), the sender IP address being a sender IP address of the received IP data packet, and
the searching the mapping table includes selecting application information corresponding to a destination IP address in the mapping table as the identified application information, if the received IP data packet is a packet being sent from one of the plurality of mobiles (140), the destination IP address being a destination IP address of the received IP data packet.

5. The method of claim 1, wherein the identified application information is a host name, and the entry formed in the tracking database is a name of an application corresponding to the host name.

6. The method of claim 1, wherein the mapping table is a hash table.

7. A network apparatus (259) for identifying application data associated with IP flows traveling between a plurality of mobiles (140) and the network apparatus in a communications network, the apparatus comprising:
a data receiving unit (254);
a data transmitting unit (252);
a memory unit (256) configured to store parameters corresponding with a plurality mobiles (140) in communication with the network element (108); and
a processing unit (258) coupled to the data transmitting unit, the data receiving unit (254), and the memory unit (256) and configured to control operations including,
receiving one or more domain name system, DNS, packets being sent to one or more mobiles from among the plurality of mobiles (140); and
building a mapping table mapping one or more IP addresses, respectively, to corresponding application information, based on mapping information within the one or more DNS packets received at the network apparatus (259);
receiving an IP data packet being sent to or from a mobile of the one or more mobiles (140);
identifying the application information corresponding to the received IP data packet, from among the application information of the mapping table, by searching the mapping table based on the IP data packet;
identifying, at the network element, the mobile the received IP data packet is being sent to or from;
building a tracking database including a plurality of sections, the plurality of sections corresponding to the plurality of mobiles, respectively; and
forming an entry in the tracking database corresponding to the identified application information, the entry being formed in the section of the tracking database that corresponds to the identified mobile.

8. The network apparatus (259) of claim 7, wherein the application information is at least one of a host name read from the one or more DNS packets received at the network apparatus (259), and a name of an application corresponding to the read host name.

9. The network apparatus (259) of claim 8, wherein the received DNS packets are DNS response packets, and the processing unit (258) is configured such that the building the mapping table includes reading the one or more IP addresses and one or more host names corresponding to the one or more IP address from the one or more DNS packets received at the network apparatus.

10. The network apparatus (259) of claim 7, wherein the processing unit is configured such that,
the searching the mapping table includes selecting application data in the mapping table corresponding to a sender IP address in the mapping table as the identified application information, if the received IP data packet is a packet being sent to one of the plurality of mobiles (140), the sender IP address being a sender IP address of the received IP data packet, and
the searching the mapping table includes selecting application information corresponding to a destination IP address in the mapping table as the identified application information, if the received IP data packet is a packet being sent from one of the plurality of mobiles (140), the destination IP address being a destination IP address of the received IP data packet.

11. The network apparatus of claim 7, wherein the application information is a host name, and the entry formed in the tracking database is a name of an application corresponding to the host name.

12. The network apparatus of claim 7, wherein the mapping table is a hash table.

## Patentansprüche

1. Verfahren zur Behandlung von Anwendungsdaten, die mit IP-Flüssen assoziiert sind, die zwischen einer Vielzahl von Mobilgeräten (140) und einem Netzelement (108) in einem Kommunikationsnetz befördert werden, wobei das Verfahren umfasst:a
den Empfang eines Domain-Name-System-Pakets (DNS-Paket) oder mehrerer an einem Netzelement (108), das oder die an ein oder mehrere Mobilgeräte aus der Vielzahl von Mobilgeräten (140) gesendet wurde(n); und
das Bilden einer Zuordnungstabelle an dem Netzelement (108), welche eine oder mehrere IP-Adressen jeweils der entsprechenden Anwendungsinformation zuordnet, was auf der Grundlage der Zuordnungsinformationen in dem einen oder den mehreren DNS-Paketen erfolgt, die an dem Netzelement (108) empfangen werden;
den Empfang am Netzelement (108) eines IP-Datenpakets, welches an ein oder von einem Mobilgerät aus der Vielzahl von Mobilgeräten (140) gesendet wird;
das Identifizieren der Anwendungsinformationen, die dem empfangenen IP-Datenpaket entsprechen, aus den Anwendungsinformationen der Zuordnungstabelle, was durch das Suchen in der Zuordnungstabelle auf der Grundlage des IP-Datenpakets erfolgt;
das Identifizieren am Netzelement (108) des Mobilgeräts, von dem oder an welches das empfangene IP-Datenpaket gesendet wurde;
der Aufbau einer Trackingdatenbank (108), welche eine Vielzahl von Abschnitten umfasst, wobei die Vielzahl von Abschnitten jeweils der Vielzahl von Mobilgeräten entspricht; und
das Erstellen eines Eintrags in die Trackingdatenbank (108), welcher den identifizierten Anwendungsinformationen entspricht, wobei der Eintrag in dem Abschnitt der Trackingdatenbank erstellt wird, der dem identifizierten Mobilgerät entspricht.

2. Das Verfahren nach Anspruch 1, wobei die Anwendungsinformationen mindestens entweder ein aus den an dem Netzelement (108) empfangenen DNS-Paketen ausgelesener Hostname oder ein Name einer Anwendung ist, die dem ausgelesenen Hostnamen entspricht.

3. Das Verfahren nach Anspruch 2, wobei die empfangenen DNS-Pakete DNS-Antwortpakete sind und wobei das Bilden der Zuordnungstabelle das Lesen der einen oder mehreren IP-Adressen und des deinen oder der mehreren Hostnamen umfasst, die der einen oder den mehreren IP-Adressen von dem einen oder den mehreren DNS-Pakete entsprechen, die an dem Netzelement (108) empfangen wurden.

4. Das Verfahren nach Anspruch 1, wobei
das Durchsuchen der Zuordnungstabelle die Auswahl von Anwendungsdaten in der Zuordnungstabelle umfasst, die als identifizierte Anwendungsinformation einer Sender-IP-Adresse in der Zuordnungstabelle entsprechen, wenn das empfangene IP-Datenpaket ein Paket ist, das an eines aus der Vielzahl von Mobilgeräten (140) gesendet wird, wobei die Sender-IP-Adresse eine Sender-IP-Adresse des empfangenen IP-Datenpakets ist, und wobei
das Durchsuchen der Zuordnungstabelle die Auswahl von Anwendungsinformationen umfasst, die als identifizierte Anwendungsinformation einer Ziel-IP-Adresse in der Zuordnungstabelle entsprechen, wenn das empfangene IP-Datenpaket ein Paket ist, das von einem aus der Vielzahl von Mobilgeräten (140) gesendet wird, wobei die Ziel-IP-Adresse eine Ziel-IP-Adresse des empfangenen IP-Datenpakets ist.

5. Das Verfahren nach Anspruch 1, wobei die identifizierte Anwendungsinformation ein Hostname ist und wobei der in der Trackingdatenbank vorgenommene Eintrag ein Name einer Anwendung ist, die dem Hostnamen entspricht.

6. Das Verfahren nach Anspruch 1, wobei die Zuordnungstabelle eine Hash-Tabelle ist.

7. Netzvorrichtung (259) zum Identifizieren von Anwendungsdaten, die mit IP-Flüssen assoziiert sind, die zwischen einer Vielzahl von Mobilgeräten (140) und der Netzvorrichtung in einem Kommunikationsnetz befördert werden, wobei die Vorrichtung umfasst:
eine Datenempfangseinheit (254);
eine Datenübermittlungseinheit (252);
eine Speichereinheit (256), die konfiguriert ist für das Speichern von Parametern, die einer Vielzahl von Mobilgeräten (140) in Kommunikation mit dem Netzelement (108) entsprechen; und
eine mit der Datenübermittlungseinheit, der Datenempfangseinheit (254) und der Speichereinheit (256) gekoppelte Verarbeitungseinheit (258), die konfiguriert ist für die Steuerung von Operationen, darunter der Empfang eines Domain-Name-System-Pakets (DNS-Paket) oder mehrerer, das oder die an ein oder mehrere Mobilgeräte aus der Vielzahl von Mobilgeräten (140) gesendet wurde(n); und
das Bilden einer Zuordnungstabelle, welche eine oder mehrere IP-Adressen jeweils der entsprechenden Anwendungsinformation zuordnet, was auf der Grundlage der Zuordnungsinformationen in dem einen oder den mehreren DNS-Paketen erfolgt, die an der Netzvorrichtung (259) empfangen werden;
der Empfang eines IP-Datenpakets, welches an ein oder von einem Mobilgerät des einen Mobilgeräts oder der mehreren Mobilgeräte (140) gesendet wird;
das Identifizieren der Anwendungsinformationen, die dem empfangenen IP-Datenpaket entsprechen, aus den Anwendungsinformationen der Zuordnungstabelle, was durch das Suchen in der Zuordnungstabelle auf der Grundlage des IP-Datenpakets erfolgt;
das Identifizieren am Netzelement des Mobilgeräts, von dem oder an welches das empfangene IP-Datenpaket gesendet wurde;
der Aufbau einer Trackingdatenbank, welche eine Vielzahl von Abschnitten umfasst, wobei die Vielzahl von Abschnitten jeweils der Vielzahl von Mobilgeräten entspricht; und
das Erstellen eines Eintrags in die Trackingdatenbank, welcher den identifizierten Anwendungsinformationen entspricht, wobei der Eintrag in dem Abschnitt der Trackingdatenbank erstellt wird, der dem identifizierten Mobilgerät entspricht.

8. Die Netzvorrichtung (259) nach Anspruch 7, wobei die Anwendungsinformationen mindestens entweder ein aus den an der Netzvorrichtung (259) empfangenen DNS-Paketen ausgelesener Hostname oder ein Name einer Anwendung ist, die dem ausgelesenen Hostnamen entspricht.

9. Die Netzvorrichtung (259) nach Anspruch 8, wobei die empfangenen DNS-Pakete DNS-Antwortpakete sind und wobei die Verarbeitungseinheit (258) so konfiguriert ist, dass das Bilden der Zuordnungstabelle das Lesen der einen oder mehreren IP-Adressen und des deinen oder der mehreren Hostnamen umfasst, die der einen oder den mehreren IP-Adressen von dem einen oder den mehreren DNS-Pakete entsprechen, die an der Netzvorrichtung empfangen wurden.

10. Die Netzvorrichtung (259) nach Anspruch 7, wobei die Verarbeitungseinheit weiterhin konfiguriert so ist, dass:
das Durchsuchen der Zuordnungstabelle die Auswahl von Anwendungsdaten in der Zuordnungstabelle umfasst, die als identifizierte Anwendungsinformation einer Sender-IP-Adresse in der Zuordnungstabelle entsprechen, wenn das empfangene IP-Datenpaket ein Paket ist, das an eines aus der Vielzahl von Mobilgeräten (140) gesendet wird, wobei die Sender-IP-Adresse eine Sender-IP-Adresse des empfangenen IP-Datenpakets ist, und wobei
das Durchsuchen der Zuordnungstabelle die Auswahl von Anwendungsinformationen umfasst, die als identifizierte Anwendungsinformation einer Ziel-IP-Adresse in der Zuordnungstabelle entsprechen, wenn das empfangene IP-Datenpaket ein Paket ist, das von einem aus der Vielzahl von Mobilgeräten (140) gesendet wird, wobei die Ziel-IP-Adresse eine Ziel-IP-Adresse des empfangenen IP-Datenpakets ist.

11. Die Netzvorrichtung nach Anspruch 7, wobei die Anwendungsinformation ein Hostname ist und wobei der in der Trackingdatenbank vorgenommene Eintrag ein Name einer Anwendung ist, die dem Hostnamen entspricht.

12. Die Netzvorrichtung nach Anspruch 7, wobei die Zuordnungstabelle eine Hash-Tabelle ist.

## Revendications

1. Procédé de traitement de données d'application associées à des flux IP circulant entre une pluralité de mobiles (140) et un élément de réseau (108) au sein d'un réseau de communications, le procédé comprenant les étapes suivantes :
recevoir, au niveau d'un élément de réseau (108), un ou plusieurs paquets de système de noms de domaine, DNS, envoyés à un ou plusieurs mobiles parmi la pluralité de mobiles (140) ; et
construire, au niveau de l'élément de réseau (108), une table de mise en correspondance associant une ou plusieurs adresses IP, respectivement, aux informations d'application correspondantes, en fonction d'informations de mise en correspondance contenues dans le ou les paquets DNS reçus au niveau de l'élément de réseau (108) ;
recevoir, au niveau de l'élément de réseau (108), un paquet de données IP envoyé par un mobile de la pluralité de mobiles (140) ;
identifier les informations d'application correspondant au paquet de données IP reçu, parmi les informations d'application de la table de mise en correspondance, en faisant une recherche dans la table de mise en correspondance en fonction du paquet de données IP ;
identifier, au niveau de l'élément de réseau (108), le mobile vers lequel ou depuis lequel le paquet de données IP reçu est envoyé ;
construire une base de données de suivi (108) contenant une pluralité de sections, la pluralité de sections correspondant à la pluralité de mobiles, respectivement, et
constituer une entrée dans la base de données de suivi (108) correspondant aux informations d'application identifiées, l'entrée étant constituée dans la section de la base de données de suivi qui correspond au mobile identifié.

2. Procédé selon la revendication 1, dans lequel les informations d'application sont constituées d'au moins un élément parmi un nom d'hôte lu dans le ou les paquets DNS reçus au niveau de l'élément de réseau (108) et un nom d'application correspondant au nom d'hôte lu.

3. Procédé selon la revendication 2, dans lequel les paquets DNS reçus sont des paquets de réponse DNS, et la construction de la table de mise en correspondance inclut la lecture de la ou des adresses IP et du ou des noms d'hôte correspondant à la ou aux adresses IP contenues dans le ou les paquets DNS reçus au niveau de l'élément de réseau (108).

4. Procédé selon la revendication 1, dans lequel
la recherche dans la table de mise en correspondance inclut la sélection de données d'application dans la table de mise en correspondance correspondant à une adresse IP d'émetteur dans la table de mise en correspondance en tant qu'informations d'application identifiées, si le paquet de données IP reçu est un paquet envoyé à l'un des mobiles de la pluralité de mobiles (140), l'adresse IP d'émetteur étant une adresse IP d'émetteur du paquet de données IP reçu, et
la recherche dans la table de mise en correspondance inclut la sélection d'informations d'application correspondant à une adresse IP de destination dans la table de mise en correspondance en tant qu'informations d'application identifiées, si le paquet de données IP reçu est un paquet envoyé depuis l'un des mobiles de la pluralité de mobiles (140), l'adresse IP de destination étant une adresse IP de destination du paquet de données IP reçu.

5. Procédé selon la revendication 1, dans lequel l'information d'application identifiée est un nom d'hôte, et l'entrée constituée dans la base de données de suivi est le nom d'une application correspondant au nom d'hôte.

6. Procédé selon la revendication 1, dans lequel la table de mise en correspondance est une table de hachage.

7. Appareil de réseau (259) destiné à identifier des données d'application associées à des flux IP circulant entre une pluralité de mobiles (140) et l'appareil de réseau au sein d'un réseau de communications, l'appareil comprenant :
une unité de réception de données (254) ;
une unité de transmission de données (252) ;
une unité mémoire (256) configurée pour stocker des paramètres correspondant à une pluralité de mobiles (140) en communication avec l'élément de réseau (108) ; et
une unité de traitement (258) couplée à l'unité de transmission de données, l'unité de réception de données (254) et l'unité mémoire (256) et configurée pour contrôler les opérations, notamment les opérations suivantes :
recevoir un ou plusieurs paquets de système de noms de domaine, DNS, envoyés à un ou plusieurs mobiles parmi la pluralité de mobiles (140) ; et
construire une table de mise en correspondance associant une ou plusieurs adresses IP, respectivement, aux informations d'application correspondantes, en fonction d'informations de mise en correspondance contenues dans le ou les paquets DNS reçus au niveau de l'appareil de réseau (259) ;
recevoir un paquet de données IP envoyé à ou depuis un mobile de la pluralité de mobiles (140) ;
identifier les informations d'application correspondant au paquet de données IP reçu, parmi les informations d'application de la table de mise en correspondance, en faisant une recherche dans la table de mise en correspondance en fonction du paquet de données IP ;
identifier, au niveau de l'élément de réseau, le mobile vers lequel ou depuis lequel le paquet de données IP reçu est envoyé ;
construire une base de données de suivi contenant une pluralité de sections, la pluralité de sections correspondant à la pluralité de mobiles, respectivement, et
constituer une entrée dans la base de données de suivi correspondant aux informations d'application identifiées, l'entrée étant constituée dans la section de la base de données de suivi qui correspond au mobile identifié.

8. Appareil de réseau (259) selon la revendication 7, dans lequel les informations d'application sont constituées d'au moins un élément parmi un nom d'hôte lu dans le ou les paquets DNS reçus au niveau de l'appareil de réseau (259) et un nom d'application correspondant au nom d'hôte lu.

9. Appareil de réseau (259) selon la revendication 8, dans lequel les paquets DNS reçus sont des paquets de réponse DNS, et l'unité de traitement (258) est configurée de sorte que la construction de la table de mise en correspondance inclue la lecture de la ou des adresses IP et du ou des noms d'hôte correspondant à la ou aux adresses IP contenues dans le ou les paquets DNS reçus au niveau de l'appareil de réseau.

10. Appareil de réseau (259) selon la revendication 7, dans lequel l'unité de traitement est configurée de sorte que,
la recherche dans la table de mise en correspondance inclue la sélection de données d'application dans la table de mise en correspondance correspondant à une adresse IP d'émetteur dans la table de mise en correspondance en tant qu'informations d'application identifiées, si le paquet de données IP reçu est un paquet envoyé à l'un des mobiles de la pluralité de mobiles (140), l'adresse IP d'émetteur étant une adresse IP d'émetteur du paquet de données IP reçu, et
la recherche dans la table de mise en correspondance inclue la sélection d'informations d'application correspondant à une adresse IP de destination dans la table de mise en correspondance en tant qu'informations d'application identifiées, si le paquet de données IP reçu est un paquet envoyé depuis l'un des mobiles de la pluralité de mobiles (140), l'adresse IP de destination étant une adresse IP de destination du paquet de données IP reçu.

11. Appareil de réseau selon la revendication 7, dans lequel l'information d'application identifiée est un nom d'hôte, et l'entrée constituée dans la base de données de suivi est le nom d'une application correspondant au nom d'hôte.

12. Appareil de réseau selon la revendication 7, dans lequel la table de mise en correspondance est une table de hachage.
